# EUROPÄISCHE PATENTSCHRIFT

(11) **EP 1 436 348 B1**
(45) Veröffentlichungstag und Bekanntmachung des Hinweises auf die Patenterteilung: **08.09.2010**
(21) Anmeldenummer: 02801301.9
(22) Anmeldetag: 01.10.2002
(51) Int. Cl.: C08J 9/20, C08J 9/00, C08L 25/06

(54) **VERFAHREN ZUR HERSTELLUNG VON EXPANDIERBAREN STYROLPOLYMERISATEN**
METHOD FOR THE PRODUCTION OF EXPANDABLE STYRENE POLYMERS
PROCEDE POUR PRODUIRE DES POLYMERES DE STYRENE EXPANSIBLES

(30) Priorität: 11.10.2001 DE 10150405
(43) Veröffentlichungstag der Anmeldung: 14.07.2004
(73) Patentinhaber: BASF SE, 67056 Ludwigshafen (DE)
(72) Erfinder: DATKO, Achim, 69226 Nussloch (DE); HAHN, Klaus, 67281 Kirchheim (DE); LEHNEN, Uwe-Johannes, 67459 Böhl-Iggelheim (DE); ZÖLLNER, Knut, 68165 Mannheim (DE)
(86) Internationale Anmeldenummer: PCT/EP2002/010982
(87) Internationale Veröffentlichungsnummer: WO 2003/033579

(56) Entgegenhaltungen:
- EP-A- 0 978 527
- WO-A-99/16817

## Beschreibung

Die Erfindung betrifft ein Verfahren zur Herstellung expandierbarer Styrolpolymerisate (EPS) mit verringerter Wärmeleitfähigkeit.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und nachfolgendes Verschweißen der so hergestellten Schaumpartikel zu Formkörpern. Ein wichtiges Einsatzgebiet ist die Wärmedämmung im Bauwesen.

Die zur Wärmedämmung eingesetzten Schaumstoffplatten aus Polystyrolpartikelschaum haben zumeist Dichten von etwa 30 g/l, da bei diesen Dichten die Wärmeleitfähigkeit des Polystyrolpartikelschaums ein Minimum aufweist. Aus Gründen der Materialeinsparung bzw. Raumeinsparung wäre es wünschenswert, Schaumstoffplatten mit geringeren Dichten, insbesondere ≤ 15 g/l zur Wärmeisolation einzusetzen. Die Herstellung derartiger Schaumstoffe ist technisch kein Problem. Schaumstoffplatten mit so geringer Dichte weisen jedoch eine drastisch verschlechterte Wärmedämmfähigkeit auf, so daß sie die Anforderungen der Wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern. In EP-A 981 575 wird vorgeschlagen, Graphit als athermanes Material einzusetzen. In dieser Patentanmeldung ist auch ausführlich ein Verfahren zur Herstellung von Graphitpartikel enthaltendem EPS beschrieben, bei dem Styrol in wäßriger Suspension in Gegenwart der Graphitpartikel polymerisiert wird. Als Polymerisationsinitiatoren wird in den Beispielen eine Kombination von Dicumylperoxid und Dibenzoylperoxid eingesetzt. Bei der Übertragung des Verfahrens in größere Maßstäbe stellt sich jedoch heraus, daß es Probleme mit der Abfuhr der Reaktionswärme gibt, und daß es in manchen Fällen zu Koagulationen kommt.

Diese Probleme lassen sich zumindest teilweise überwinden, wenn man nach WO 99/16817 als Peroxid, das bei relativ niedriger Temperatur zerfällt, nicht Dibenzoylperoxid einsetzt, sondern ein solches, welches weder Benzoyl- noch Benzylradikale bildet, beispielsweise tert.-Butylperoxy-2-ethylhexanoat. Um ausreichend stabile Suspensionen zu erhalten, soll dabei zu Beginn der Suspensionspolymerisation eine Lösung von Polystyrol in Styrol vorliegen. Dadurch wird erreicht, dass die suspension auch bei Erhöhung der Temperatur noch eine genügend hohe Viskosität aufweist und damit ausreichend stabil ist.

Bei Polymerisationen in technischem Maßstab hat es sich gezeigt, daß in der Praxis 20 bis 30 Gew.-%ige Polystyrol-Lösungen benötigt werden, damit die Polymerisation störungsfrei und reproduzierbar abläuft, ohne daß es zu Koagulation kommt. Als Polystyrol werden dabei sogenannte Randfraktionen eingesetzt, die bei der Auftrennung des bei der EPS-Herstellung anfallenden Perlspektrums als zu große oder zu kleine Perlen ausgesiebt werden. Dadurch werden aber, bedingt durch den Innenwassergehalt der Randfraktionen und durch zugesetzte Beschichtungsmittel, Verunreinigungen in die Suspension eingeschleppt.

Der Erfindung lag daher die Aufgabe zugrunde, bei der EPS-Herstellung durch Suspensionspolymerisation von Styrol in Gegenwart von Graphit mit möglichst wenig zugesetztem Polystyrol auszukommen.

Diese Aufgabe wird erfindungsgemäß dadurch gelöst, daß die Polymerisation in Gegenwart eines Peroxids durchgeführt wird, welches eine Halbwertszeit von 1 Stunde bei 50 bis weniger als 70°C aufweist.

Es wird angenommen, daß derartige Peroxide, die schon während der ersten Aufheizphase der Suspensionspolymerisation in Radikale zerfallen, eine frühzeitige Polymerisat-Bildung auslösen und dadurch das kritische, auf die Temperaturerhöhung zurückzuführende Absinken der Viskosität verhindern. Andererseits sind diese Peroxide gerade noch so stabil, daß sie bei Raumtemperatur ohne aufwändige Kühlung lagerfähig sind.

Die EP-A 1 057 838 beschreibt ebenfalls ein Verfahren zur Herstellung von EPS mit zwei, bei verschiedenen Temperaturen zerfallenden Peroxiden, die erst dann zugegeben werden, wenn beim Aufheizen des Ansatzes die Temperatur 50°C überstiegen hat. Das eine Peroxid soll eine Halbwertszeit von 1 Stunde bei 70°C bis 110°C, das andere bei 110 bis 135°C aufweisen. Die Probleme, die bei der Polymerisation in Gegenwart von Graphitpartikeln bezüglich der Abfuhr der Reaktionswärme und hinsichtlich Koagulation auftreten, sind in dieser Druckschrift nicht angesprochen.

Unter expandierbaren Styrolpolymerisaten werden Treibmittel enthaltende Styrolpolymerisate verstanden.

Das erfindungsgemäße EPS enthält als Polymermatrix Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemäßen Suspensionspolymerisation können die üblichen Hilfsmittel, wie z. B. Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Der eingesetzte Graphit hat vorzugsweise eine mittlere Partikelgröße von 1-50 µm, insbesondere von 2,5-12 µm, ein Schüttgewicht von 100-500 g/l und eine spezifische Oberfläche von 5 - 20 m²/g. Es kann Naturgraphit oder synthetischer Graphit eingesetzt werden.

Die Graphitpartikel werden bei der erfindungsgemäßen Suspensionspolymerisation in Mengen von 0,1 bis 25, insbesondere von 2 bis 8 Gew.-%, bezogen auf das resultierende Styrolpolymerisat, zugegeben. Sie werden entweder pulverförmig oder als granulatförmiges Konzentrat in Polystyrol eingesetzt. Es ist grundsätzlich auch möglich, die Graphitpartikel erst im Verlauf der Suspensionspolymerisation zuzusetzen, bevorzugt während der ersten Hälfte des Polymerisationszyklus.

Die Suspensionspolymerisation wird in Gegenwart von mindestens zwei bei verschiedenen Temperaturen zerfallenden Peroxiden durchgeführt. Das bei höherer Temperatur zerfallende Peroxide A sollte eine Halbwertszeit von 1 Stunde bei 110°C bis 150°C, vorzugsweise bei 120 bis 140°C aufweisen.

Als Peroxid A können grundsätzlich alle üblichen, bei den genannten hohen Temperaturen zerfallenden Peroxide eingesetzt werden. Bevorzugt sind jedoch solche, die frei von Benzoylgruppen sind, wenn das erhaltene EPS benzolfrei sein soll. Bevorzugte Peroxide A sind daher Dicumylperoxid, sowie die aliphatischen oder cycloaliphatischen Perketale oder Monoperoxycarbonate, die in der EP-A 574 665 aufgeführt sind. Peroxid A wird bevorzugt in Mengen von 0,1 bis 2,0 Gew.-%, insbesondere von 0,3 bis 1,0 Gew.-%, bezogen auf die Monomeren, eingesetzt.

Das Peroxid B, welches gegebenenfalls in Mengen von 0 bis 0,5 Gew.-%, vorzugsweise von 0,02 bis 0,3 Gew.-%, bezogen auf die Monomeren, zugesetzt wird, sollte beim Zerfall keine Benzoyl- und Benzylradikale bilden. Bevorzugt sind solche Peroxide B, die beim Zerfall Alkoxyradikale bilden. Beispielsweise genannt seien tert.-Butylperoxy-2-ethylhexanoat, Amylperoxy-2-ethylhexanoat, tert.-Butylperoxydiethylacetat sowie tert.-Butylperoxyisobutanoat.

Erfindungsgemäß wird bei der Suspensionspolymerisation ein Peroxid C mit einer Halbwertzeit von 1 Stunde bei 50 bis weniger als 70°C vorzugsweise, vorzugsweise bei 60 bis 69°C zugesetzt, und zwar in Mengen von 0,01 bis 0,5 Gew.-%, insbesondere von 0,03 bis 0,3 Gew.-%, bezogen auf die Monomeren. Geeignete Peroxide C sind Dicetylperoxydicarbonat ("Perkadox 24" von AKZO-NOBEL), Bis(4-tert.-butyl-cyclohexyl)peroxydicarbonat ("Perkadox 16") und Dimyristylperoxydicarbonat ("Perkadox 26"). Diese Peroxide haben eine Halbwertszeit von 1 Stunde im Bereich von 60 bis 70°C.

Die Suspensionspolymerisation wird zweckmäßigerweise in mehreren Temperaturstufen durchgeführt. Dabei wird zunächst die Suspension auf 80°C bis 100°C erhitzt, wobei die Peroxide C und B zerfallen und die Polymerisation einleiten. Danach läßt man die Reaktionstemperatur, vorzugsweise um 5 bis 17°C pro Stunde, ansteigen bis auf 100 bis 145°C und hält bei dieser Temperatur so lange bis der Restmonomerengehalt auf weniger als 0,1 % abgesunken ist. In diesem Temperaturbereich zerfällt das Peroxid A. Mit dieser Verfahrensweise ist man in der Lage, EPS mit geringen Restmonomergehalten zu erzeugen. Die Verwendung von Peroxiden mit unterschiedlichen Halbwertszeiten in Abhängigkeit von der Temperatur gestattet eine kontrollierte Abfuhr der Reaktionswärme über den gesamten Prozeß. Dies ist insbesondere wichtig für große Reaktionsgefäße, wie sie in der industriellen Produktion zur Anwendung kommen, welche über ein ungünstiges Volumen/Oberflächen-Verhältnis zur Wärmeabfuhr verfügen.

Es hat sich gezeigt, daß es auch bei großtechnischen Ansätzen für die Stabilität der Suspension ausreicht, wenn bei Beginn der Suspensionspolymerisation eine Lösung von relativ wenig Polystyrol (bzw. einem entsprechenden Styrolcopolymerisat) in Styrol (bzw. der Mischung von Styrol mit Comonomeren) vorliegt. Bevorzugt geht man dabei von einer 0 bis 18, insbesondere 1 bis 15 Gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden.

Bei der Suspensionspolymerisation entstehen perlförmige, im wesentlichen runde Teilchen mit einem mittleren Durchmesser im Bereich von 0,2 bis 2 mm, in denen die Graphitpartikel homogen verteilt sind. Sie können mit den üblichen Beschichtungsmitteln, z. B. Metallstearaten, Glycerinestern und feinteiligen Silicaten beschichtet werden.

Die expandierbaren, Graphitpartikel enthaltenden Styrolpolymerisate können zu Polystyrolschaumstoffen mit Dichten von 5 bis 35 g/l, bevorzugt von 8 bis 25 g/l und insbesondere von 10 bis 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele

### Beispiel 1a (1m³-Kessel)

In 354 kg Styrol werden 35,4 kg Polystyrol, 3,894 kg Hexabromcyclododecan, 14,16 kg Graphit (FL 08 99, 5M, Fa. Kaisersberg), 2,018 kg Dicumylperoxid, 0,354 kg tert.-Butylperoctoat sowie 0,354 kg Dicetylperoxydicarbonat, "Perkadox 24" (Akzo-Nobel) unter Rühren beigemischt. Die organische Phase wird in 592 1 vollentsalztes Wasser und 71,448 kg Magnesiumpyrophosphatfällung in einem druckfesten 1m³-Rührkessel eingebracht. Das Reaktionsgemisch wird unter Rühren innerhalb 0,75 Stunden auf 60°C erhitzt. Anschließend wird innerhalb von 3,0 Stunden auf 80°C und weiteren 3,75 h auf 130°C erhitzt, wobei nach 145 min nach Erreichen von 80°C 7,814 kg Emulgator K30 1 %ig (Bayer), nach 195 min nach Erreichen von 80°C über eine Dauer von 30 min 26,55 kg Pentan und nach 240 min nach Erreichen von 80°C 3,894 kg Armostat 2 %ig zugegeben werden. Schließlich wird 3 Stunden bei 130°C auspolymerisiert.

Einen Hinweis darauf, daß der Ansatz stabil war, ergab das Rühren der Kesselprobe (Probe, die vor dem Reaktionsstart entnommen wurde und das Phasenverhältnis des Ansatzes aufweist): Diese zeigte auch nach Tagen des Rührens noch Perlen.

### Beispiel 1b (Vergleich)

### analog a), jedoch Dicetylperoxydicarbonat wurde weggelassen.

Einen Hinweis darauf, daß der Ansatz sehr rasch instabil wurde, ergab das Rühren der Kesselprobe (Probe, die vor dem Reaktionsstart entnommen wurde und das Phasenverhältnis des Ansatzes aufweist) : Bereits nach 2 Stunden des Rührens koagulierten die Perlen zu einer kontinuierlichen, schlierenartigen organischen Phase.

### Beispiel 2a (21-Kessel)

In 0,628 kg Styrol werden 6,277 g Polystyrol gelöst und 3,58 g Dicumylperoxid, 0,628 g tert.-Butylperoctoat sowie 0,634 g Dicetylperoxydicarbonat, "Perkadox 24" (Akzo-Nobel) und 25,11 g Grafit UF 298 unter Rühren beigemischt. Die organische Phase wird in 0,966 kg vollentsalztes Wasser in einem druckfesten 2 1-Rührkessel eingebracht. Die wäßrige Phase enthält zudem 116,57 g Magnesiumpyrophosphatfällung. Das Reaktionsgemisch wird unter Rühren innerhalb 1,5 Stunden auf 95°C erhitzt. Anschließend wird innerhalb von 4 Stunden auf 130°C erhitzt, wobei nach 200 min 12,75 g Emulgator K30 (1 %ig) zugegeben wird. Schließlich wird 2 Stunden bei 130°C auspolymerisiert.

Der Ansatz zeigte bei Beobachtung durch ein Schauglas im Druckreaktor während der gesamten Polymerisation stabile Perlen von gleichbleibender Größe von 0,5-3 mm in der wäßrigen Phase.

### Beispiel 2b (Vergleich)

Es wird der gleiche Ansatz wie unter A) beschrieben verwendet, allerdings wird das Perkadox 24 nicht eingesetzt.

Der Ansatz zeigt bei Beobachtung durch ein Schauglas bereits kurze Zeit nach Beginn des Rührens eine Instabilität, die Perlen koagulierten zu einer kontinuierlichen, schlierenartigen organischen Phase.

### Beispiel 2c

Es wird der gleiche Ansatz wie unter A) beschrieben verwendet, allerdings wird das tert.-Butylperoctoat nicht zugesetzt.

Das Ergebnis entsprach dem von Beispiel 2a.

## Patentansprüche

1. Verfahren zur Herstellung von expandierbaren Styrolpolymerisaten (EPS), bei dem man Styrol, gegebenenfalls zusammen mit bis zu 20 % seines Gewichts an Comonomeren, in wäßriger Suspension in Gegenwart von 0,1 bis 25 Gew.-% Graphitpartikel und von mindestens zwei, bei verschiedenen Temperaturen zerfallenden organischen Peroxiden polymerisiert, **dadurch gekennzeichnet, daß** eines der Peroxide eine Halbwertszeit von 1 Stunde bei 50 bis weniger als 70°C aufweist.

2. Verfahren zur Herstellung von EPS nach Anspruch 1, **dadurch gekennzeichnet, daß** die Polymerisation durchgeführt wird in Gegenwart von
A. 0,1 bis 2 Gew.-% eines Peroxids mit einer Halbwertszeit von 1 Stunde bei 110 bis 150°C, gegebenenfalls
B. 0 bis 0,5 Gew.-% eines Peroxids mit einer Halbwertszeit von 1 Stunde bei 80 bis 100°C, und
C. 0,01 bis 0,5 Gew.-% eines Peroxids mit einer Halbwertszeit von 1 Stunde bei 50 bis weniger als 70°C,
wobei die Gew.-% jeweils auf die Monomeren bezogen sind.

3. Verfahren zur Herstellung von EPS nach Anspruch 1, **dadurch gekennzeichnet, daß** das Peroxid A frei von Benzoylgruppen ist.

4. Verfahren zur Herstellung von EPS nach Anspruch 1, **dadurch gekennzeichnet, daß** das Peroxid A Dicumylperoxid ist.

5. Verfahren zur Herstellung von EPS nach Anspruch 1, **dadurch gekennzeichnet, daß** das Peroxid B beim Zerfall Alkoxyradikale bildet.

6. Verfahren zur Herstellung von EPS nach Anspruch 1, **dadurch gekennzeichnet, daß** das Peroxid B tert.-Butylperoxy-2-ethyl-hexanoat ist.

7. Verfahren zur Herstellung von EPS nach Anspruch 1, **dadurch gekennzeichnet, daß** das Peroxid C Dicetylperoxydicarbonat, Bis(4-tert.-butyl-cyclohexyl)peroxydicarbonat oder Dimyristylperoxydicarbonat ist.

8. Verfahren zur Herstellung von EPS nach Anspruch 1, **dadurch gekennzeichnet, daß** bei der Suspensionspolymerisation eine Lösung von 0 bis 18 Gew.-%ige Polystyrol in Styrol eingesetzt wird.

## Claims

1. A process for the preparation of expandable styrene polymers (EPS) in which styrene, if desired together with up to 20% of its weight of comonomers, is polymerized in aqueous suspension in the presence of from 0.1 to 25% by weight of graphite particles and in the presence of at least two organic peroxides which decompose at different temperatures, wherein one of the peroxides has a half life of 1 hour at from 50 to less than 70°C.

2. The process for the preparation of EPS according to claim 1, wherein the polymerization is carried out in the presence of
A. from 0.1 to 2% by weight of a peroxide having a half life of 1 hour at from 110 to 150°C, if desired
B. from 0 to 0.5% by weight of a peroxide having a half life of 1 hour at from 80 to 100°C, and
C. from 0.01 to 0.5% by weight of a peroxide having a half life of 1 hour at from 50 to less than 70°C,
where the % by weight data are in each case based on the monomers.

3. The process for the preparation of EPS according to claim 1, wherein the peroxide A is free from benzoyl groups.

4. The process for the preparation of EPS according to claim 1, wherein the peroxide A is dicumyl peroxide.

5. The process for the preparation of EPS according to claim 1, wherein the peroxide B forms alkoxy free radicals on decomposition.

6. The process for the preparation of EPS according to claim 1, wherein the peroxide B is tert-butyl peroxy-2-ethylhexanoate.

7. The process for the preparation of EPS according to claim 1, wherein the peroxide C is dicetyl peroxydicarbonate, bis(4-tert-butylcyclohexyl) peroxydicarbonate or dimyristyl peroxydicarbonate.

8. The process for the preparation of EPS according to claim 1, wherein a solution of from 0 to 18% by weight of polystyrene in styrene is employed in the suspension polymerization.

## Revendications

1. Procédé pour production de polymères de styrène expansibles (EPS), dans lequel on polymérise du styrène, éventuellement conjointement avec jusqu'à 20 % de son poids de comonomères, en suspension aqueuse en présence de 0,1 à 25 % en poids de particules de graphite et d'au moins deux peroxydes organiques se décomposant à des températures différentes, **caractérisé en ce que** l'un des peroxydes présente une demi-vie de 1 heure à une température de 50 à moins de 70 °C.

2. Procédé pour la production d'EPS selon la revendication 1, **caractérisé en ce que** la polymérisation est effectuée en présence de
A. 0,1 à 2 % en poids d'un peroxyde ayant une demi-vie de 1 heure à une température de 110 à 150 °C, éventuellement
B. 0 à 0,5 % en poids d'un peroxyde ayant une demi-vie de 1 heure à une température de 80 à 100 °C, et
C. 0,01 à 0,5 % en poids d'un peroxyde ayant une demi-vie de 1 heure à une température de 50 à moins de 70 °C,
les % en poids étant chacun par rapport aux monomères.

3. Procédé pour la production d'EPS selon la revendication 1, **caractérisé en ce que** le peroxyde A est exempt de groupes benzoyle.

4. Procédé pour la production d'EPS selon la revendication 1, **caractérisé en ce que** le peroxyde A est le peroxyde de dicumyle.

5. Procédé pour la production d'EPS selon la revendication 1, **caractérisé en ce que,** lors de la décomposition, le peroxyde B forme des radicaux alcoxy.

6. Procédé pour la production d'EPS selon la revendication 1, **caractérisé en ce que** le peroxyde B est le peroxy-2-éthylhexanoate de tert-butyle.

7. Procédé pour la production d'EPS selon la revendication 1, **caractérisé en ce que** le peroxyde C est le peroxydicarbonate de dicétyle, le peroxydicarbonate de bis(4-tert-butyl-cyclohexyle) ou le peroxydicarbonate de dimyristyle.

8. Procédé pour la production d'EPS selon la revendication 1, **caractérisé en ce que** dans la polymérisation en suspension on utilise une solution de 0 à 18 % en poids de polystyrène dans du styrène.
